# EUROPÄISCHE PATENTSCHRIFT

(11) **EP 0 506 701 B1**
(45) Veröffentlichungstag und Bekanntmachung des Hinweises auf die Patenterteilung: **01.03.1995**
(21) Anmeldenummer: 91900235.2
(22) Anmeldetag: 26.11.1990
(51) Int. Cl.: B01D 69/12, B01D 53/22

(54) **VERBUNDMEMBRAN, VERFAHREN ZU IHRER HERSTELLUNG UND IHRE VERWENDUNG**
COMPOSITE DIAPHRAGM, PROCESS FOR PRODUCING IT AND ITS USE
MEMBRANE COMPOSITE, SON PROCEDE DE FABRICATION ET SON UTILISATION

(30) Priorität: 23.12.1989 DE 3942867; 27.02.1990 DE 4006139
(43) Veröffentlichungstag der Anmeldung: 07.10.1992
(73) Patentinhaber: HOECHST AKTIENGESELLSCHAFT, 65926 Frankfurt am Main (DE)
(72) Erfinder: HAUBS, Michael, D-6550 Bad Kreuznach (DE); PRASS, Werner, D-6500 Mainz (DE)
(86) Internationale Anmeldenummer: EP9002021
(87) Internationale Veröffentlichungsnummer: WO9109669

(56) Entgegenhaltungen:
- EP-A- 0 059 393
- EP-A- 0 134 056
- US-A- 3 874 986
- US-A- 3 892 665
- Thin Solid Films, Band 180, Nr. 1, 21. November 1989, Elsevier Seqouia, (Lausanne, CH), P. Stroeve et al.: "Gas transfer in supported Langmuir-Blodgett films", Seiten 241-248
- Journal of Colloid and Interface Science, Band 27, Nr. 2, Juni 1968, G.D. Rose et al.: "Gas transport through supported Langmuir-Blodgett multilayers", Seiten 193-207

## Beschreibung

Die vorliegende Erfindung betrifft eine aus drei Schichten aufgebaute Verbundmembran, die sich gut zur Auftrennung von Gasgemischen eignet und die eine permselektive Schicht aus regelmäßig angeordneten amphiphilen Molekülen enthält.

In der Technik stellt sich oftmals die Aufgabe, Gasgemische völlig zu trennen oder eine Komponente des Gasgemisches zumindest anzureichern. Diese Aufgabe wird in zunehmendem Maße mit Hilfe von semipermeablen Membranen erfüllt. Diese Membranen lassen Gase je nach Löslichkeit und Diffusionskoeffizienten mit unterschiedlicher Geschwindigkeit passieren.

Aus der DE-OS 34 15 624 ist bereits eine Verbundmembran zur Gastrennung mit einer Dreischichtstruktur bekannt. Sie enthält eine Stützmembranschicht aus porösem Polymerisat (A), eine nicht-poröse, gaspermeable Zwischenschicht (B) aus Polyorganosiloxan und eine dünne Schicht eines speziellen Polymeren, das ein günstiges O₂/N₂-Permeabilitätskoeffizienten-Verhältnis (Selektivität) aufweist (C). Diese Schicht kann erhalten werden durch Aufbringen eines dünnen Films, der durch das Spreitverfahren auf einer Wasseroberfläche erzeugt werden kann.

Für die technische Anwendbarkeit solcher Gasseparations-Membranen sind sowohl ihre Permeabilität als auch ihre Selektivität von besonderer Bedeutung.

Die Permeabilität einer Membran für ein bestimmtes Gas hängt sowohl von der Dicke der aktiven Schicht (= permselektive Schicht), als auch von dem Permeabilitätskoeffizienten für dieses Gas ab. Die Gasdurchlässigkeit (Permeabilität) der gaspermeablen Zwischenschicht (B) ist im allgemeinen wesentlich größer als die der permselektiven Schicht.

Die Trenn-Selektivität einer Membran wird in erster Linie von dem Material der Schicht (C) bestimmt. Die Erfahrung lehrt jedoch, daß Materialien hoher Selektivität einen geringen Permeationskoeffizienten aufweisen.

Daher blieben alle Versuche, Polymermaterialien für C zu finden, die sowohl eine hohe Selektivität, als auch einen großen Permeabilitätskoeffizienten aufweisen, bisher erfolglos. Man hat daher nur die Wahl zwischen hochpermeablen und wenig selektiven oder selektiven und wenig permeablen Membranen. Letztere werden heute für technische Anwendungen bevorzugt eingesetzt.

Um zu akzeptablen Permeationsraten zu gelangen, ist man bestrebt, die Dicke der aktiven Schicht (= permselektive Schicht) so dünn wie möglich zu machen. Dabei setzt allerdings das Auftreten von Defekten, sogenannten pin-holes dem Streben nach immer geringeren Schichtdicken Grenzen.

So ist es heute möglich, permselektive Schichten mit Schichtdicken von etwa 0,05 bis 0,5 »m (= 50-500 nm) herzustellen. Die Anwendung von Membranen mit solchen Schichtdicken ist möglich geworden, nachdem man gelernt hatte, die in solchen dünnen (permselektiven) Schichten immer auftretenden pin-holes mit Silikongummi quasi zu verstopfen (Henis, J.M.S.; Tripodi, M.K.; Sep. Sci. Technol. 1980, 15, 1059).

Die Silikonschicht kann also als äußere Schicht auf die Membran aufgebracht werden. Sie kann aber auch durch die Stützmembranschicht und die permselektive Schicht eingehüllt werden (vgl. DE-OS 34 15 624).

Dennoch sind diese bekannten Membranen gerade in bezug auf ihre Permeabilität noch verbesserungsbedürftig. Es bestand daher die Aufgabe, eine für die Gastrennung geeignete Verbundmembran zu schaffen, die bei guter Selektivität eine erheblich verbesserte Permeabilität aufweist.

Es wurde nun eine Verbundmembran zur Gastrennung mit einer Dreischichtstruktur gefunden, die aufgebaut ist aus
A) einer Stützmembranschicht aus porösem Polymerisat,
B) einer nichtporösen, gaspermeablen Zwischensicht, aus einem amorphen Polymer mit einer hohen Gasdurchlässigkeit,
C) einer permselektiven Schicht aus regelmäßig angeordneten organischen Molekülen mit einer Schichtdicke von 3 bis 100 nm,
wobei die Schichten (A) und (C) die Zwischenschicht (B) einhüllen, die dadurch gekennzeichnet ist, daß die permselektive Schicht (C) aus regelmäßig angeordneten polymeren amphiphilen Molekülen besteht, die eine oder zwei Alkylgruppen mit je 7 bis 25 Kohlenstoffatomen pro polare hydrophile Gruppe enthalten und ein Molekulargewicht von über 5000 aufweisen. Die Schicht (A) der Verbundmembran stellt ein poröses Mikro- oder Ultrafilter dar. Die gaspermeable Zwischenschicht (B) soll aus einem amorphen Polymeren mit einer hohen Gasdurchlässigkeit bestehen. Geeignete Polymere sind z. B. Polymethylpenten, Polysiloxan-Polycarbonat-Blockcopolymere, Polytrimethylsilylpropin, EPDM-Kautschuk oder chloriertes Polyethylen. Vorzugsweise besteht die permselektive Schicht (C) aus mindestens zwei übereinander angeordneten monomolekularen Schichten aus amphiphilen Molekülen.
Die amphiphilen Moleküle der permselektiven Schicht sollen wasserunlöslich sein und stabile Monoschichten an der Grenzfläche Wasser/Luft ausbilden, insbesondere sollen sie eine Wasserlöslichkeit von weniger als 59/L bei 20°C besitzen. Monoschichten von niedermolekularen amphiphilen Verbindungen sind z. B. bekannt aus de DE-OS 37 24 688. Amphiphile Moleküle enthalten jeweils einen hydrophilen (polaren) "Kopf" und mindestens einen hydrophoben (unpolaren) Rest, beispielsweise eine lange Alkylkette oder Perfluoralkylkette. Als Beispiel für ein ein hochmolekulares Amphiphil sei Polyhexadecylacrylat erwähnt. Andere amphiphile Polymere mit langkettigen Alkylgruppen sind bekannt z. B. aus A. Laschewsky, H. Ringsdorf, G. Schmidt, J. Schneider, J. Am. Chem. Soc. 109 (1987), 788-796. Auf diese Publikationen wird hiermit ausdrücklich Bezug genommen. Vorzugsweise enthalten die niedermolekularen oder monomeren amphiphilen Moleküle der permselektiven Schicht eine oder zwei Alkylketten mit 8 bis 18, insbesondere 8 bis 16, Kohlenstoffatomen pro (polarer) hydrophiler Gruppe.

Der hydrophobe Teil der amphiphilen Moleküle soll eine gewisse Mindestlänge aufweisen. Es ist bevorzugt, wenn die amphiphile Verbindung neben der (den) hydrophoben Gruppe(n) als hydrophile Gruppe mindestens eine Äther-, Hydroxy-, Carbonsäure-, Amin-, Carbonsäureamid-, Ammoniumsalz-, Sulfat-, Sulfonsäure-, Phosphorsäure-, Phosphonsäure-, Phosphonsäureester-, Phosphonsäureamid- oder Phosphorsäureamid-Gruppe enthält.

Besonders bevorzugt ist es, wenn der polare Teil der amphiphilen Verbindung ausgewählt ist aus den folgenden Gruppen
-OR⁵
-COOR³ 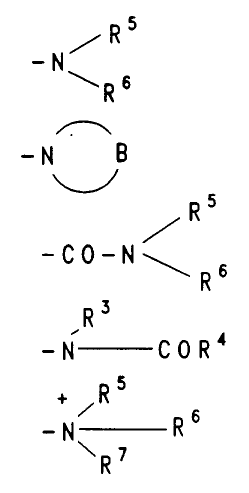
-SO₃H
-OSO₃R³
-OPO(OR³)(OR⁴)
-E
-O-E
-NR³-E,
wobei R³ bis R⁷, B und E folgendes bedeuten:

- R³ und R⁴: unabhänig voneinander H oder C₁-C₃-Alkyl,
- R⁵, R⁶ und R⁷: unabhängig voneinander H, C₁-C₄-Alkyl, -C₂H₄OH oder -CH₂-CHOH-CH₃, insbesondere H oder CH₃
- B: einen zweiwertigen organischen Rest, so daß 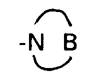 einen stickstoffhaltigen Heterocyclus, insbesondere einen 5- oder 6-gliedrigen, gesättigten oder ungesättigten Heterocyclus mit 1 bis 3 C-Atomen oder N- und O-Atomen oder N- und S-Atomen bildet, und
- E: 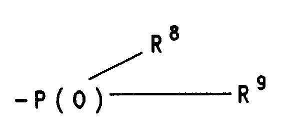 oder 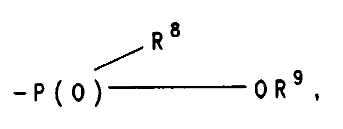 wobei R⁸ und R⁹ unabhängig voneinander für 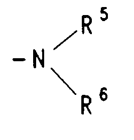 stehen.

Als amphiphile Verbindung eignen sich auch Homopolymere und Copolymere, die unter Verwendung der Verbindungen der allgemeinen Formel I 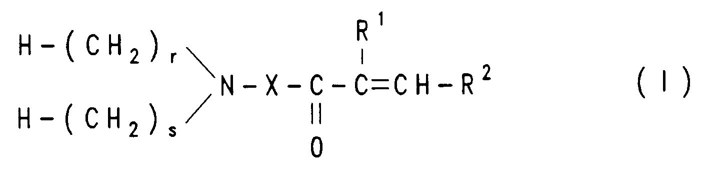
hergestellt werden, in der
- R¹: H, Cl, F, CN oder (CH₂)ₓH
- R²: H, (CH₂)ᵤH oder -CH = CH-(CH₂)ᵤH
- X: eine einfache Bindung, -(CH₂)_{y}Y-, CO-(CH₂)_{y}-Y-, -(CH₂CH₂O)_{y}, -CO-(CH₂)_{y}-CO-Z- oder
-CO-(CH₂)_{Y}O-(CH₂CH₂-O)_{V}-(CH₂)_{y}-CO-(OCH₂CH₂)ₜ-Y
- Z: -O-(CH₂-CH₂-O-)_{w}
- Y: O, NH oder Z
- r: eine Zahl von 7 bis 21
- s: eine Zahl von 0 bis 24
- x,y,t: unabhängig voneinander Zahlen von 1 bis 10, und
- u,v,w: unabhängig voneinander Zahlen von 0 bis 10 bedeuten.

Die erfindungsgemäße Verbundmembran läßt sich dadurch herstellen, daß man auf eine Trägermembran, die aus einer Stützmembranschicht (A) aus porösem Polymerisat und einer nicht-porösen, gaspermeablen Schicht (B) aus einem amorphen Polymer mit hoher Gasdurchlässigkeit besteht, eine permselektive Schicht (C) aus organischem Material aufträgt. Das Verfahren ist dadurch gekennzeichnet, daß man eine in Wasser nicht lösliche polymere amphiphile Verbindung, die eine oder zwei Alkylketten mit je 7-20 Kohlenstoffatomen pro polarer hydrophiler Gruppe im Molekül enthält und ein Molekulargewicht von über 5000 aufweist, in einem organischen leicht flüchtigen Lösungsmittel löst, die Lösung auf einer Wasseroberfläche spreitet, den entstehenden monomolekularen Film nach der Langmuir-Blodgett-Technik komprimiert und als monomolekulare permselektive Schicht auf die eingetauchte Trägermembran überträgt. Man kann auch Gemische von amphiphilen Verbindungen verwenden. In den einzelnen, nacheinander aufgetragenen monomolekularen Filmen können unterschiedliche Amphiphile eingesetzt werden. Vorzugsweise wird die permselektive monomolekulare Schicht auf die gaspermeable Schicht (B) der Trägermembran aufgebracht.

Die eingesetzte Trägermembran (= Stützmembran + Zwischenschicht B) läßt sich durch Beschichten eines Mikro- oder Ultrafilters (= A) aus Polysulfon, Polyimid, Polyacrylnitril, Polyamid, Polyetherketon mit den erwähnten amorphen Polymeren herstellen. Die Schicht des amorphen Polymeren soll nicht porös und gaspermeabel sein. Die Schichtdicke beträgt vorzugsweise 15 nm bis 500 nm, vorzugsweise30 bis 250 nm, insbesondere 50 bis 100 nm. Als Polymere für die gaspermeable Zwischenschicht (B) eignen sich z.B. Blockcopolymere aus Polysiloxan und Polycarbonat oder Poly-4-methylpenten. Das Verfahren der Beschichtung wird beschrieben in Ward, W.J. III, et al: J. Membr. Sci. 1976, 1, 99.

Es ist ein Vorteil des erfindungsgemäßen Verfahrens, daß sich nach der Langmuir-Blodgett-Technik mehrere hochgeordnete und gasselektive Schichten nacheinander auf die Trägermembran aufbringen lassen. Außerdem läßt sich die sehr dünne Schicht mit homogener Dicke aufbringen.

Um mit Hilfe der erfindungsgemäßen Verbundmembran Gase zu trennen oder zumindest anzureichern, bringt man das aufzutrennende Gasgemisch in einen Behälter, der durch eine Gastrennmembran mit einer dem Gasgemisch zugewandten permselektiven Außenbeschichtung verschlossen ist. Auf der anderen Seite der Gastrennmembran wird ein geringer Druck aufrechterhalten als im Inneren des Behälters und die angereicherte Komponente des Gasgemisches abgezogen. Die permselektive Schicht aus amphiphilen Molekülen ist vorzugsweise der Überdruckseite zugewandt. Das Verfahren eignet sich auch zur Trennung eines aus N₂ und O₂ bestehenden Gasgemisches.

Die Erfindung wird durch die Beispiele näher erläutert.

### Beispiel 1 (Vergleichsbeispiel)

### Gastrennmembranmit Dreischichtaufbau mit 4-Hexa-decyloxybenzaldehyd-4'-nitrophenylhydrazon als aktiver Trennschicht

Ein 70 x 70 mm großes Stück einer Trägermembran, bestehend aus einer porösen Trägermembran aus Polypropylen (Celgard 2400), die mit einer 0,5 »m dicken nichtporösen Schicht von Polydimethylsiloxan-Polycarbonat Blockcopolymer beschichtet wurde, wird nach dem Verfahren von Langmuir und Blodgett mit 4 Monolagen 4-Hexa-decyloxybenzaldehyd-4'-nitrophenylhydrazon beschichtet. Hierzu wird ein entsprechend großes Stück aus der Trägermembran herausgeschnitten und auf einen 70 x 90 mm großen Rahmen aus Polycarbonat gespannt. Die zu beschichtende Membran wird unter Reinraumbedingungen mit Wasser abgespült. Zweihundert Mikroliter einer Lösung von 6 mg 4-Hexadecyloxybenzaldehyd-4'-nitrophenylhydrazon in 5 ml Dichlormethan wird bei einer Subphasentemperatur von 20°C auf die Wasseroberfläche einer käuflichen Langmuir-Filmwaage (Filmwaage 2 der Firma MGW Lauda) aufgegeben (gespreitet). Durch Verkleinerung der monofilmbedeckten Wasseroberfläche wird der Schub auf 30 mN/m eingeregelt und bei diesem Wert konstant gehalten. Der Rahmen mit der aufgespannten Membran wird nun senkrecht von oben durch die Wasseroberfläche in die Filmwaage eingetaucht (Eintauchgeschwindigkeit: 20 mm/min) und nach einer kurzen Pause (10 sec.) am unteren Umkehrpunkt wieder heausgenommen (Austauchgeschwindigkeit: 10 mm/min). Sowohl beim Eintauch- als auch beim Austauchvorgang wird dabei eine Monolage auf den Träger übertragen. Nach Beendigung des Austauchvorgangs wird der restliche Monofilm von der Wasseroberfläche abgesaugt und erneut, wie oben beschrieben, ein Monofilm gespreitet, auf 30 mN/m komprimiert und durch Ein- oder Austauchen zwei weitere Monolagen auf die Trägermembran übertragen. Die Übertragungsverhältnisse liegen bei 90 - 100 %.
Die Permeabilitäten für verschiedene Gase (Stickstoff, Sauerstoff und Kohlendioxid) der so hergestellten Dreischichtmembran wurden gemessen. Aus den Messungen ergaben sich folgende Werte für die Permeabilitäten und die Selektivitäten:
- Gasfluß bei 25°C (Nm³/m²·Tag·bar): N₂: 1,97 O₂: 4,73 CO₂: 27,6
- Selektivität:: O₂/N₂: 2.4 CO₂/N₂: 14

### Beispiel 2

### Gastrennmembran mit Dreischichtaufbau mit Polyhexadecylmethacrylat als aktiver Trennschicht

Gemäß Beispiel 1 wurde die Trägermembran mit 12 Monolagen Polyhexadecylmethacrylat beschichtet. Die Übertragungsbedingungen hierbei sind:

| | |
|---|---|
| Subphasentemperatur: | 30°C |
| Schub: | 10 mN/m |
| Schub: | 10 mN/m |
| Eintauchgeschwindigkeit: | 20 mm/min |
| Austauchgeschwindigkeit: | 20 mm/min |

| Übertragungsverhältnis | |
|---|---|
| a) beim Eintauchen: | ca. 40 % |
| b) beim Austauchen: | 90 - 100 % |

Die Permeabilität der so hergestellten Membranen wird wie in Beispiel 1 für die Gase Sauerstoff, Stickstoff, Kohlendioxid und Helium gemessen. Dabei werden folgende Ergebnisse erhalten:
- Gasfluß bei 25°C Nm³/m²·Tag·bar: N₂: 1,31, O₂: 3,74, CO₂: 19,7; He: 18,4
- Selektivität:: O₂/N₂: 2,85, CO₂/N₂: 14,8, He/N₂: 14.

## Patentansprüche

1. Verbundmembran zur Gastrennung mit einer Dreischichtstruktur, aufgebaut aus
A) einer Stützmembranschicht aus porösem Polymerisat,
B) einer nichtporösen, gaspermeablen Zwischenschicht, aus einem amorphen Polymer mit einer hohen Gasdurchlässigkeit,
C) einer permselektiven Schicht aus regelmäßig angeordneten organischen Molekülen mit einer Schichtdicke von 3 bis 100 nm,
wobei die Schichten (A) und (C) die Zwischenschicht (B) einhüllen, dadurch gekennzeichnet, daß die permselektive Schicht (C) aus regelmäßig angeordneten polymeren amphiphilen Molekülen besteht, die eine oder zwei Alkylketten mit je 7 bis 25 Kohlenstoffatomen pro polare hydrophile Gruppe enthalten und ein Molekulargewicht von über 5000 aufweisen.

2. Verbundmembran gemäß Anspruch 1, dadurch gekennzeichnet, daß die permselektive Schicht (C) aus mindestens zwei übereinander angeordneten monomolekularen Schichten aus amphiphilen Molekülen besteht.

3. Verfahren zur Herstellung einer Verbundmembran gemäß Anspruch 1, wobei man auf eine Trägermembran, die aus einer Stützmembranschicht (A) aus porösen Polymerisat und einer nicht-porösen, gaspermeablen Schicht (B) aus einem amorphen Polymer mit hoher Gasdurchlässigkeit besteht, eine permselektive Schicht (C) aus organischem Material aufträgt, dadurch gekennzeichnet, daß man eine in Wasser nicht lösliche polymere amphiphile Verbindung, die eine oder zwei Alkylketten mit je 7 - 20 Kohlenstoffatomen pro polarer hydrophiler Gruppe im Molekül enthält und ein Molekulargewicht von über 5000 aufweist, in einem organischen leicht flüchtigen Lösungsmittel löst, die Lösung auf einer Wasseroberfläche spreitet, den entstehenden Film nach der Langmuir-Blodgett-Technik kompromiert und als monomolekulare permselektive Schicht auf die eingetauchte Trägermembran überträgt.

4. Verfahren nach Anspruch 3, dadurch gekennzeichnet, daß man die permselektive monomolekulare Schicht auf die gaspermeable Schicht (B) der Trägermembran aufbringt.

5. Verfahren zum Trennen eines Gasgemischs in angereicherte Komponenten, wobei man das Gasgemisch in einen Behälter bringt, der durch eine Gastrennmembran mit einer dem Gasgemisch zugewandten permselektiven Außenbeschichtung verschlossen ist, man auf der anderen Seite der Gastrennmembran einen geringeren Druck als im Inneren des Behälters aufrecht hält und eine angereicherte Komponente des Gasgemischs abzieht, dadurch gekennzeichnet, daß man die Verbundmembran gemäß Anspruch 1 als Gastrennmembran einsetzt.

6. Verfahren nach Anspruch 5, dadurch gekennzeichnet, daß ein aus Stickstoff und Sauerstoff bestehendes Gasgemisch getrennt wird.

## Claims

1. A composite membrane for gas separation having a three-layer structure, constructed from
A) a supporting membrane layer made of porous polymer,
B) a nonporous, gas-permeable intermediate layer, made of an amorphous polymer having a high gas permeability,
C) a permselective layer of regularly arranged organic molecules having a layer thickness of 3 to 100 nm,
the layers (A) and (C) enclosing the intermediate layer (B), wherein the permselective layer (C) is composed of regularly arranged polymeric amphiphilic molecules which contain one or two alkyl chains each having 7 to 25 carbon atoms per polar hydrophilic group and have a molecular weight of over 5000.

2. The composite membrane as claimed in claim 1, wherein the permselective layer (C) is composed of at least two monomolecular layers of amphiphilic molecules arranged one above the other.

3. A process for the production of a composite membrane as claimed in claim 1, in which a permselective layer (C) of organic material is applied to a supporting membrane which is composed of a supporting membrane layer (A) made of porous polymer and a nonporous, gas-permeable layer (B) made of an amorphous polymer having high gas permeability, wherein a water-insoluble polymeric amphiphilic compound which contains one or two alkyl chains each having 7-20 carbon atoms per polar hydrophilic group in the molecule and has a molecular weight of over 5000 is dissolved in an easily volatile organic solvent, the solution is spread on a water surface, and the resulting film is compressed by the Langmuir-Blodgett technique and transferred to the immersed supporting membrane as a monomolecular permselective layer.

4. The process as claimed in claim 3, wherein the permselective monomolecular layer is applied to the gas-permeable layer (B) of the supporting membrane.

5. A process for separating a gas mixture into concentrated components, in which the gas mixture is brought into a container which is closed by a gas-separating membrane having a permselective outer coating facing the gas mixture, a lower pressure than in the interior of the container is maintained on the other side of the gas-separating membrane and a concentrated component of the gas mixture is withdrawn, wherein the composite membrane as claimed in claim 1 is employed as the gas-separating membrane.

6. The process as claimed in claim 5, wherein a gas mixture composed of nitrogen and oxygen is separated.

## Revendications

1. Membrane composite pour la séparation de gaz, à structure en trois couches, constituée par
A) une couche de membrane support en polymère poreux;
B) une couche intermédiaire non poreuse perméable aux gaz, en un polymère amorphe ayant une perméabilité aux gaz élevée;
C) une couche à perméabilité sélective constituée de molécules organiques orientées régulièrement, ayant une épaisseur de couche de 3 à 100 nm,
les couches (A) et (C) enveloppant la couche intermédiaire (B), caractérisée en ce que la couche à perméabilité sélective (C) est constituée de molécules amphiphiles polymères orientées régulièrement, qui contiennent une ou deux chaînes alkyle de 7 à 25 atomes de carbone par groupe hydrophile polaire et qui ont une masse moléculaire supérieure à 5000.

2. Membrane composite selon la revendication 1, caractérisée en ce que la couche à perméabilité sélective (C) est constituée d'au moins deux couches monomoléculaires superposées de molécules amphiphiles.

3. Procédé de préparation d'une membrane composite selon la revendication 1, selon lequel on applique une couche à perméabilité sélective (C), composée d'une matière organique, sur une membrane de base constituée d'une couche de membrane support (A) en polymère poreux et d'une couche (B) non poreuse, perméable aux gaz, composée d'un polymère amorphe très perméable aux gaz, caractérisé en ce que l'on dissout dans un solvant organique très volatil un composé polymère amphiphile insoluble dans l'eau, qui contient une ou deux chaînes alkyle de 7 à 20 atomes de carbone par groupe hydrophile polaire dans la molécule et qui a une masse moléculaire supérieure à 5000, on étale la solution sur une surface d'eau, on comprime selon la technique de Langmuir-Blodgett le film monomoléculaire formé et on le transfère sous forme d'une couche monomoléculaire à perméabilité sélective sur la membrane de base immergée.

4. Procédé selon la revendication 3, caractérisé en ce que l'on applique la couche monomoléculaire à perméabilité sélective sur la couche perméable aux gaz (B) de la membrane de base.

5. Procédé de séparation d'un mélange de gaz en des constituants concentrés, selon lequel on amène le mélange gazeux à séparer dans un récipient qui est fermé par une membrane séparatrice de gaz munie d'un revêtement externe à perméabilité sélective tourné vers le mélange gazeux, on maintient de l'autre côté de la membrane séparatrice de gaz une pression inférieure à celle de l'intérieur du récipient et on soutire un constituant concentré du mélange gazeux, caractérisé en ce que l'on utilise comme membrane séparatrice de gaz la membrane composite selon la revendication 1.

6. Procédé selon la revendication 5, caractérisé en ce que l'on sépare un mélange gazeux constitué d'azote et d'oxygène.
